# EUROPÄISCHE PATENTSCHRIFT

(11) **EP 2 401 325 B1**
(45) Veröffentlichungstag und Bekanntmachung des Hinweises auf die Patenterteilung: **24.09.2014**
(21) Anmeldenummer: 10725384.1
(22) Anmeldetag: 21.05.2010
(51) Int. Cl.: C08L 1/02, A23C 9/154, A23G 1/56, A23L 1/0534

(54) **STABILISATOR FÜR LEBENSMITTELANWENDUNGEN**
STABILIZER FOR FOOD APPLICATIONS
STABILISANT POUR APPLICATIONS ALIMENTAIRES

(30) Priorität: 26.05.2009 DE 102009022738
(43) Veröffentlichungstag der Anmeldung: 04.01.2012
(73) Patentinhaber: J. Rettenmaier & Söhne GmbH + Co. KG, 73494 Rosenberg (DE)
(72) Erfinder: BACHE, Georg, 74424 Bühlertann (DE); UNGERER, Ralf, 73492 Rainau (DE)
(74) Vertreter: Dr. Weitzel & Partner
(86) Internationale Anmeldenummer: PCT/EP2010/003127
(87) Internationale Veröffentlichungsnummer: WO 2010/136157

(56) Entgegenhaltungen:
- WO-A1-92/01390
- WO-A1-97/25878
- DE-A1- 2 656 802
- US-A1- 2007 128 333

## Beschreibung

Die Erfindung betrifft das Stabilisieren von Lebensmitteln jeglicher Art. Im Lebensmittelbereich werden sogenannte Stabilisierungsmittel verwendet. Diese sollen Wasser-Öl-Emulsionen stabilisieren, das heißt, sie sollen eine Trennung der beiden Komponenten verhindern. Ferner dienen Stabilisatoren auch dazu, Feststoffe in wässrigen Systemen in Suspension zu halten, das heißt eine Sedimentation zu verhindern.

Stabilisatoren sind in einer großen Vielfalt bekannt und werden angewandt. Eine Gruppe von Stabilisatoren umfasst eine Kombination von kolloidaler mikrokristalliner Cellulose (MCC) sowie Carboxymethylcellulose (CMC). Nach Römpp Lexikon Lebensmittelchemie, Georg Thieme Verlag Stuttgart, New York; 9. Auflage, 1995; Seite 158 stellt Carboxymethylcellulose das Natrium-Salz des Glykolsäureethers der Cellulose dar. Diese Produkte werden in einem Nassverfahren einem mechanischen Scherprozess unterworfen und dabei in den kolloidalen Zustand überführt. Nach Kombination mit CMC, mit der MCC synergistische Effekte eingeht, erfolgt die Trocknung zum Endprodukt. Auf US 3 539 365 wird verwiesen. Ferner offenbart WO 97/25878 A1 eine Flüssignahrung, der als Stabilisator eine Mischung aus mikrokristalliner Cellulose und zwei Carboxymethylcellulosen mit unterschiedlicher Viskosität zugegeben wird. Des Weiteren ist aus der WO 92/01390 A1 die Verwendung unterschiedlicher CMCs als Zugabe zu MMC für eine in Puderform vorliegende trockene Nahrungsmittelmischung bekannt. Des Weiteren offenbart DE 26 56 802 A1 Sahne mit guter Lagerfähigkeit, die eine kolloidale Dispersion in Form mikrokristalliner Cellulose und Carboxymethylcellulose enthält. Dabei wird die mikrokristalline Cellulose zunächst mit Carboxymethylcellulose behandelt und eine weitere Carboxymethylcellulose wird der wässrigen, kolloidalen Dispersion zugegeben.

Die Wirksamkeit der bisher verfügbaren Stabilisatoren ist begrenzt. Häufig entsprechen die vom Benutzer gewünschten Eigenschaften nicht allen Anforderungen. Auch sind Stabilisatoren bezüglich des Anwendungsgebietes begrenzt. So gibt es Produkte, die nur für Milchprodukte verwendbar sind, weil sie unter den dort vorherrschenden Bedingungen leicht aktivierbar sind, zum Beispiel bei hohem Ca-Gehalt. Daher werden den bekannten Stabilisierungssystemen zur Steigerung der Effizienz, zur besseren Aktivierung oder zur geringeren Elektrolytfähigkeit neben MCC und CMC weitere Hydrokolloide zugefügt, beispielsweise Carrageen. Es gibt jedoch Gründe, weshalb diese Additive nicht überall eingesetzt werden können, zum Beispiel Gründe der Produktion oder der Deklaration.

Ein weiterer Nachteil bekannter Additive besteht darin, dass deren Menge sehr groß sein muss, um etwas zu bewirken. So ist es beispielsweise beim Stabilisieren von Kakaopartikeln in Schokodrinks notwendig, wenigstens 0,5 Prozent der

Additive zuzusetzen. Die Additive verlangen außerdem häufig ein aufwendiges Verarbeitungs- und Aufbereitungsverfahren.

Der Erfindung liegt die Aufgabe zugrunde, einen Stabilisator anzugeben, der kostengünstig und einfach herstellbar ist, der eine hohe Wirksamkeit hat, und der bereits in geringen Mengen den gewünschten Erfolg erzielt. Diese Aufgabe wird durch die Merkmale der selbständigen Ansprüche gelöst.

Die Erfindung geht aus von einer Dispersion aus MCC und CMC. Die Erfinder haben erkannt, dass ein ganz bestimmter Anteil von CMC vorteilhaft ist, und dass außerdem der Substitutionsgrad (DS) der beiden genannten Komponenten eine große Rolle spielt.

Mit den erfindungsgemäßen Stabilisatoren ist es möglich, mit geringen Einsatzmengen auszukommen. So reichen beispielsweise 0,2 Prozent der erfindungsgemäßen Dispersion aus, Kakaopartikel in Milch zu stabilisieren. Dies bedeutet eine ganz erhebliche Steigerung der Effektivität, und zugleich eine verbesserte Aktivierbarkeit. Hierdurch werden zusätzliche Additive überflüssig. Die Steigerung der Effektivität lässt sich durch übliche rheologische Kenndaten belegen, wie beispielsweise durch den Speichermodul, wie bei zwei verschiedenen Medien gezeigt, beispielsweise bei Milch oder Leitungswasser.

Zusammenfassend ergeben sich aus der Erfindung die folgenden Vorteil:
- Höhere Effizienz bei der Stabilisierung von Emulsionen oder von Feststoffen in wässrigen Systemen, basierend auf höheren Speichermodulen (Gelstärke G')
- Geringe Menge an Stabilisator notwendig
- Aktivierung bei geringem Aufwand von Scherenergie
- Höhere Toleranz gegenüber Faktoren, die die Aktivierung negativ beeinflussen, beispielsweise Elektrolyte

### Beispiel 1

Ein der Erfindung entsprechendes, auf MCC und CMC basierendes Stabilisierungsmittel mit der Bezeichnung MCG 0048, sowie drei am Markt angebotene Stabilisierungsmittel mit der Bezeichnung AVICEL CL 611, AVICEL RC 591 F und AVICEL plus GP3282 (letzteres enthält zusätzlich Carrageen) werden "in-line" mittels Homogenisator, bei 200 bar aktiviert, um ein Kakaogetränk zu stabilisieren.

Bei allen Stabilisierungsmitteln wurden die Grenzdosierungen ermittelt, bei welchen sich nach 24 bzw. 48 h, kein Bodensatz in den Glasflaschen im stabilisierten Kakaogetränk mehr ausbildet.

Die gesamte Prozedur inklusive Auswertung ist, siehe Anlage 2, beschrieben.

Beispielrezeptur Kakaogetränk für MCG 0048

| | % | G |
|---|---|---|
| **Stabisisierungsmittel MCG 0048** | 0,1 | 1,00 |
| Zucker | 6,00 | 60,00 |
| Kakao (CEBE) | 0,50 | 5,00 |
| | | |
| Milch 1,5 % Fett | 93,4 | 934,0 |
| | | |
| | **100,00** | **1000,00** |

### Übersicht Applikationsbeispiel Kakaogetränk:

Die Tabelle gibt einen Überblick über die erforderlichen Dosierungen zur Stabilisierung von Kakaopartikeln in fettarmer Milch der nach Beispiel 1 behandelten Proben:

| | Grenzdosierung für ausreichende Stabilisierung der Kakaopartikel |
|---|---|
| ***A VICEL CL 611*** | 0,6-0,7% |
| ***A VICEL RC 591F*** | 0,4-0,5 % |
| ***A VICEL plus GP 3282*** (mit Carrageenanteil) | 0,2-0,3 % |
| ***VITACEL MCG 0048*** | 0,1-0,15 % |

### Beispiel 2

Ein der Erfindung entsprechendes, auf MCC und CMC basierendes Stabilisierungsmittel mit der Bezeichnung MCG 0048, sowie 2 am Markt angebotene Stabilisierungsmittel mit der Bezeichnung AVICEL CL 611, AVICEL RC 591 F werden durch verschiedene Aktivierungsmethoden in verschiedenen Medien (deionisiertes Wasser; 0,05 % CaCl2; 0,1 % CaCl2 und Milch) aktiviert.

### Die Durchführung und Ergebnisse sind in Test 1 und Test 2 beschirieben

### Test 1, Aktivierung "in-line" im Homogenisator, bei 200 bar, 3 %ig

Die gesamte Prozedur, inklusive Auswertung, ist siehe Anlage 1 und 3, beschrieben. Messapperatur, Physika MCR 301 Meßsystem:CC27, Meßzelle:C-PTD200, Oszillationstest,
Gelaufbau "Sofortmessung", Gelaufbau nach 120 Sekunden,

| **Aktiviert in** | **Probe** | **tan□** | **G' (Pa)** |
|---|---|---|---|
| | | | |
| | **AVICEL** | | |
| **deionisiertes Wasser** | **CL 611 F** | 0,843 | **1,61** |
| | | | |
| | | | |
| | **AVICEL** | | |
| | **RC 591 F** | 0,122 | **21,70** |
| | | | |
| | | | |
| | **VIVAPUR** | | |
| | **MCG 0048** | 0,134 | **51,77** |
| | | | |
| | | | |
| | **AVICEL** | | |
| **CaCl2-Lsg, 0,05 %** | **CL 611 F** | 0,936 | **1,11** |
| | | | |
| | | | |
| | **AVICEL** | | |
| | **RC 591 F** | 0,137 | **15,42** |
| | | | |
| | | | |
| | **VIVAPUR** | | |
| | **MCG 0048** | 0,106 | **33,15** |
| | **AVICEL** | | |
| **CaCl2-Lsg, 0,1 %** | **CL 611 F** | 0,689 | **1,61** |
| | | | |
| | | | |
| | **AVICEL** | | |
| | **RC 591 F** | 0,222 | **7,63** |
| | | | |
| | | | |
| | **VIVAPUR** | | |
| | **MCG 0048** | 0,092 | **29,02** |
| | | | |
| | | | |
| | **AVICEL** | | |
| **UHT-Milch, 1,5 % Fett** | **CL 611 F** | 0,407 | **9,06** |
| | | | |
| | | | |
| | **AVICEL** | | |
| | **RC 591 F** | 0,258 | **15,10** |
| | | | |
| | | | |
| | **VIVAPUR** | | |
| | **MCG 0048** | 0,122 | **51,93** |
| | | | |

### Test 2, Aktivierung im Waring Blender, 18000 upm, 2 min, 3 %ig

Die gesamte Prozedur, inklusive Auswertung, ist siehe Anlage 1 und 4, beschrieben. Messapperatur, Physika MCR 301 Meßsystem:CC27, Meßzelle:C-PTD200, Oszillationstest,
Gelaufbau "Sofortmessung", Gelaufbau nach 120 Sekunden,

| **Aktiviert in** | **Probe** | **tan□** | **G' (Pa)** |
|---|---|---|---|
| | | | |
| | **AVICEL** | | |
| **deionisiertes Wasser** | **CL 611 F** | 1, 151 | **0,93** |
| | | | |
| | | | |
| | **AVICEL** | | |
| | **RC 591 F** | 0,156 | **18,45** |
| | | | |
| | | | |
| | **VIVAPUR** | | |
| | **MCG 0048** | 0,142 | **49,00** |
| | | | |
| | | | |
| | **AVICEL** | | |
| **CaCl2-Lsg, 0,05 %** | **CL 611 F** | 1,169 | **0,64** |
| | | | |
| | | | |
| | **AVICEL** | | |
| | **RC 591 F** | 0,194 | **11,63** |
| | | | |
| | | | |
| | **VIVAPUR** | | |
| | **MCG 0048** | 0,113 | **31,24** |
| | **AVICEL** | | |
| **CaCl2-Lsg, 0,1 %** | **CL 611 F** | 1,120 | **0,63** |
| | | | |
| | | | |
| | **AVICEL** | | |
| | **RC 591 F** | 0,355 | **4,09** |
| | | | |
| | | | |
| | **VIVAPUR** | | |
| | **MCG 0048** | 0,100 | **26,88** |
| | | | |
| | | | |
| | **AVICEL** | | |
| **UHT-Milch, 1,5 % Fett** | **CL 611 F** | 0,522 | **5,31** |
| | | | |
| | | | |
| | **AVICEL** | | |
| | **RC 591 F** | 0,314 | **11,28** |
| | | | |
| | | | |
| | **VIVAPUR** | | |
| | **MCG 0048** | 0,144 | **41,81** |
| | | | |

In allen untersuchten Medien (verschiedene Wasserqualitäten, Milch) sowie bei allen untersuchten Aktivierungsmethoden zeigt der erfindungsgemäße Stabilisator höhere Speichermodule als die am Markt befindlichen Produkte.

Als besonders brauchbar hat sich ein Compound gezeigt, das die folgenden Eigenschaften hat:
- es liegt in Form eines Gels vor, gewonnen durch Homogenisieren eines Compound-Pulvers;
- es weist eine Gelstärke von wenigstens 25 Pa auf, bei einer 3 %igen Einsatzkonzentration, bezogen auf das Medium, in welchem das Compound dispergiert wird.

Dabei werden zweckmäßigerweise die folgenden Apparaturen verwendet:
Waring Blender 1 Liter mit Glasaufsatz, 3 %ig 18000 upm
Homogenisator Typ APV 1000, 3 %ig, 200 bar
Physika MCR 301, Messsystem CC 27, Messzelle C-PTD 200, 3 %ig

### In den Beispielen 1 und 2 verwendete Apparaturen:

Waage
Stoppuhr
Spannungsregler zur Drehzahleinstellung
Waring Blender 1 Liter mit Glasaufsatz, zum Beispiel Modell 38BC41 oder HGB2W
Homogenisator Typ: APV 1000
Physika MCR 301, Messsystem: CC27, Messzelle: C-PTD200

### Anlage 1

| **Beschreibung Messprogramm: Physika MCR 301** | |
|---|---|
| Messabschnitt 1 Belastung | Messmethode |
| | Rotation konstant-Vorscherung |
| | |
| | Messprofil |
| | ---Scherrate 3000 1/s |
| | |
| | Messpunkte: 2 |
| | |
| | Messzeit: 5 min |
| Messabschnitt 2 Wiederaufbau | Messmethode |
| | Oszillation-Strukturaufbau |
| | |
| | Messprofil |
| | ---- Deformation: 1 % konst. |
| | ---- Kreisfrequenz: 10 1/s konst. |
| | |
| | Messpunkte: 600 |
| | |
| | Messzeit: 600 s (1 s / Mspkt) konst. |
| | Zeitvorgabe |
| | |
| | Auswertung |
| | Speichermodul G', Verlustmodul G", |
| | Verlustfaktor tanδ, Kreuzpunkt G'=G" |

Die an den Beispielen beschriebenen Proben wurden mit dem Rheometer: Physika MCR 301, Messsystem: CC27, Messzelle: C-PTD200, gemessen und ausgewertet.

### Anlage 2

Beschreibung der Prüfmethode zur Darstellung der Kakaomilch
1. Fülle 1000,0 g Milch - Einwaage Prüfprobe (raumtemperiert) - in den Glasaufsatz des Waring Blenders.
2. Drücke die Taste HI2.
3. Starte bei 7000 - 8000 U/min (Anzeige 40 V am Messgerät) und füge die vorgemischten Trockenstoffe (Kakao, 5g; Zucker, 60g; und Stabilisierungsmittel) zu. Vermeide, dass Material an die Glaswand gelangt.
4. Starte die Stoppuhr und mische weitere 120 s, bei 40 V.
5. Nach ca. 15 min Quellzeit wird die Suspension bei 200 bar homogenisiert, während des gesamten Vorgangs wird die Kakaosuspension gerührt (Ankerrührer, 200 U/min) um eine fortlaufende Gleichmäßigkeit der Konzentration zu sichern.
6. Die homogenisierte, aktivierte Kakaomilch wird in Glasflaschen abgefüllt und im Kühlschrank bei - 6 °C gelagert.
7. Die Auswertung erfolgt nach 24 h und 48 h. Nach 24 h wird die Kakaomilch nochmals vorsichtig geschüttelt.
   Die Glasflaschen werden visuell auf Bodensatz Kakao untersucht und fotografiert.

### Anlage 3

### Durchführung Probenvorbereitung Homogenisator:

Wasser steht für entmineralisiertes Wasser und CaCl2 für angereichertes Wasser. Stelle 1000 g einer 3 %igen Dispersion her.
1. Fülle 1000,0 g Wasser/Milch - Einwaage Prüfprobe (raumtemperiert) - in den Glasaufsatz des Waring Blenders.
2. Drücke die Taste HI2.
3. Starte bei 8000 - 10000 U/min (Anzeige 50 V am Messgerät) und füge 30,0 g atro der Prüfprobe hinzu. Vermeide, dass Material an die Glaswand gelangt.
4. Starte die Stoppuhr und mische weitere 60 s.
5. Homogenisiere die 3 %ige Suspension bei 200 bar, während des gesamten Vorgangs wird die 3 %ige Suspension gerührt (Ankerrührer, 200 U/min).

### Anlage 4

### Durchführung Probenvorbereitung Waring Blender:

Wasser steht für entmineralisiertes Wasser und CaCl2 für angereichertes Wasser.

Stelle 300g einer 3 %igen Dispersion her.
1. Fülle 300,0 g Wasser/Milch - Einwaage Prüfprobe (raumtemperiert) - in den Glasaufsatz des Waring Blenders.
2. Drücke die Taste HI2.
3. Starte bei 8000 -10000 U/min (Anzeige 50 V am Messgerät) und füge 9,0 g atro der Prüfprobe hinzu. Vermeide, dass Material an die Glaswand gelangt.
4. Starte die Stoppuhr und mische weitere 15 s.
5. Stelle 140 -160 V (entspr. 18000 -19000 U/min) ein und mische genau 2 Minuten, um eine fortlaufende Gleichmäßigkeit der Konzentration zu sichern.

## Patentansprüche

1. Compound aus mikrokristalliner Cellulose (MCC)
1.1 in zumindest teilweise kolloidaler Form
1.2 mit einem Anteil von Carboxymethylcellulose (CMC) zwischen 5 und 18 %, bezogen auf die Trockenmasse
1.3 mit einer niedrig substituierten CMC mit einem DS von 0,6 - 0,9 sowie einer hochsubstituierten CMC mit einem DS von 1,10 - 1,45.

2. Compound nach Anspruch 1, **dadurch gekennzeichnet, dass** die niedrigsubstituierte CMC in einem Anteil von 30 - 70 % vorliegt, und die hochsubstituierte CMC in einem Anteil von 70 - 30 %.

3. Compound nach einem der Ansprüche 1 bis 2, **gekennzeichnet durch** die folgenden Merkmale:
3.1 das Compound liegt in Form eines Gels vor, gewonnen **durch** Homogenisieren eines Compound-Pulvers;
3.2 das Gel weist eine Gelstärke von wenigstens 25 Pa bei einer 3 %igen Einsatzkonzentration auf, bezogen auf das Medium, in welchem das Compound dispergiert wird.

4. Verwendung einer Dispersion hergestellt aus dem Compound gemäß einem der Ansprüche 1 bis 3 als Stabilisator für Lebensmittel wie Fleisch, Milch oder sonstige Getränke.

## Claims

1. A compound, comprising
1.1 microcrystalline cellulose (MCC) and two different qualities of carboxymethyl cellulose (CMC) in at least partly colloidal form, **characterized in that** 1.2 the different qualities of CMCs have different degrees of substitution (DS), with a low-substituted CMC being present with a DS of 0.6 to 0.9 and a high-substituted CMC with a DS of 1.10 to 1.45, and
1.3 the percentage of CMC in the compound is between 5 and 18% by weight relating to the dry matter.

2. A compound according to claim 1, **characterized in that** the low-substituted CMC is present at a percentage of 30 to 70% and the high-substituted CMC at a percentage of 70 to 30%.

3. A compound according to one of the claims 1 to 2, **characterized by** the following features:
3.1 the compound is present in form of a gel, obtained by homogenizing a compound powder;
3.2 the gel has a gel strength of at least 25 Pa at a 3% application concentration relating to the medium in which the compound is dispersed.

4. The use of a dispersion, produced from the compound according to one of the claims 1 to 3 as a stabilizer for foodstuffs such as meat, milk or other beverages.

## Revendications

1. Composé de cellulose microcristalline (MCC)
1.1 sous forme colloïdale au moins partiellement
1.2 avec une proportion de carboxyméthylcellulose (CMC) comprise entre 5 et 18%, rapportée à la masse sèche
1.3 comprenant un CMC faiblement substitué avec un DS de 0.6 - 0.9 de même qu'un CMC fortement substitué avec un DS de 1.10 - 1.45.

2. Composé selon la revendication 1, **caractérisé en ce que** le CMC faiblement substitué est présent dans une proportion de 30 - 70% et que le CMC fortement substitué est présent dans une proportion de 70 - 30%.

3. Composé selon l'une des revendications 1 à 2, présentant les caractéristiques suivantes:
3.1 le composé est sous forme de gel, obtenu par homogénéisation d'une poudre de composé ;
3.2 le gel présente une force de gel d'au moins 25 Pa pour une concentration d'utilisation de 3%, rapportée au milieu dans lequel le composé est dispersé.

4. Utilisation d'une dispersion fabriquée à partir du composé selon l'une des revendications 1 à 3, comme stabilisateur pour aliments tels que la viande, le lait ou autres boissons.
